# EUROPÄISCHE PATENTSCHRIFT

(11) **EP 3 516 201 B1**
(45) Veröffentlichungstag und Bekanntmachung des Hinweises auf die Patenterteilung: **08.07.2020**
(21) Anmeldenummer: 17801373.6
(22) Anmeldetag: 06.11.2017
(51) Int. Cl.: F02M 37/22, F02M 37/00, B60K 15/077

(54) **VERFAHREN ZUM ENTWÄSSERN EINES BETRIEBSSTOFFS SOWIE ENTWÄSSERUNGSEINRICHTUNG**
METHOD FOR DEWATERING AN OPERATING SUBSTANCE AND DEWATERING DEVICE
PROCÉDÉ DE DÉSHUMIDIFICATION D'UN CONSOMMABLE AINSI QUE DISPOSITIF DE DÉSHUMIDIFICATION

(30) Priorität: 18.11.2016 DE 102016222778
(43) Veröffentlichungstag der Anmeldung: 31.07.2019
(73) Patentinhaber: Siemens Mobility GmbH, 81739 München (DE)
(72) Erfinder: GERSTENMEYER, Stephan, 91088 Bubenreuth (DE)
(86) Internationale Anmeldenummer: PCT/EP2017/078327
(87) Internationale Veröffentlichungsnummer: WO 2018/091297

(56) Entgegenhaltungen:
- WO-A1-2006/034889
- WO-A1-2012/024013
- WO-A2-2009/059102
- DE-A1- 2 735 822
- DE-A1- 10 122 674
- DE-A1-102010 002 607
- GB-A- 2 482 956
- US-B1- 6 371 087

## Beschreibung

Die Erfindung betrifft ein Verfahren zum Entwässern eines Betriebsstoffs, insbesondere eines Kraftstoffs, bevorzugt während eines Betriebs eines Fahrzeugs, insbesondere eines Schienenfahrzeugs. Ferner betrifft die Erfindung eine Entwässerungseinrichtung für einen Betriebsstoff, insbesondere einen Kraftstoff.

Bei einem Schienenfahrzeug, insbesondere einer Diesellokomotive (Triebfahrzeug), existiert das Problem, dass sich in einem Betriebsstoff, insbesondere einem Kraftstoff, zu viel Wasser befinden kann. Ein Wassereintrag in den Betriebsstoff erfolgt z.B. über Tankdepots, einen defekten Tankverschluss, Schwitzwasser etc., wobei zu viel Wasser unweigerlich zu Schäden, insbesondere Motorschäden, führt. Ferner wird der Kraftstoff unten aus einem Kraftstofftank mit dem Ziel entnommen, eine Verschlammung zu minimieren. Hierbei wird jedoch auch ein im Kraftstofftank abgesetztes Wasser in einen Filter und in Richtung eines Verbrennungsmotors des Schienenfahrzeugs gefördert.

Um Schäden zu vermeiden und somit eine Betriebsverlängerung eines Schienenfahrzeugs trotz mit Wasser kontaminiertem Betriebsstoff zu erreichen ist es notwendig, das Wasser aus dem Betriebsstoff zu entfernen. Dies gilt insbesondere für eine Betriebsverlängerung und eine Vermeidung eines Motorschadens bei einer Diesellokomotive, deren Dieselkraftstoff mit Wasser verunreinigt ist. Eine herkömmliche Lösung dieses Problems besteht darin, dass das im Dieselkraftstoff mitgeführte Wasser in einem separaten Wasserbehälter abgeschieden wird. Ab einer festgelegten Füllmenge von Wasser im Wasserbehälter erhält ein Triebfahrzeugführer die Aufforderung das Wasser abzulassen. Dies wird meist ignoriert und führt in Folge zu Schäden in einem Verbrennungsmotor der Diesellokomotive.

Aus Dokument WO 2006034889 A1 ist eine Kraftstoffversorgungseinrichtung für eine Brennkraftmaschine bekannt. Die Kraftstoffversorgungseinrichtung weist eine Hochdruckpumpe auf, durch die Kraftstoff zu einer Einspritzstelle an einem Zylinder Brennkraftmaschine gefördert wird. Der Hochdruckpumpe ist eine Abscheidungsvorrichtung vorgeordnet, durch die im Kraftstoff enthaltenes Wasser abgeschieden wird. Durch die Abscheidungsvorrichtung abgeschiedenes Wasser wird zumindest mittelbar dem Abgasstrom der Brennkraftmaschine zugeführt.

Aus Dokument WO 2012/024013 A1 ist ein Verfahren und ein System zum Betreiben eines Fahrzeugs bekannt, die einen Motor und ein Kraftstoffsystem umfassen.

Es ist eine Aufgabe der Erfindung, ein verbessertes Verfahren zum Entwässern eines Kraftstoffs während eines Betriebs eines Schienenfahrzeugs anzugeben.

Ferner ist es eine Aufgabe der Erfindung, eine entsprechende Entwässerungseinrichtung anzugeben.

Gemäß der Erfindung soll eine ungewollte Förderung von Wasser zum Motor vermieden werden, um Schäden im Motor des Fahrzeugs zu verhindern.

Die Aufgabe der Erfindung wird durch die Merkmale der unabhängigen Patentansprüche gelöst.

Vorteilhafte Weiterbildungen sind in den abhängigen Ansprüchen angegeben.

Bei der vorliegenden Erfindung wird ein Kraftstoff während eines Betriebs eines Schienenfahrzeugs entwässert. Der Kraftstoff wird als Betriebsstoff aus einem Betriebsstofftank herausgefördert. Im Betriebsstoff vorliegendes Wasser wird in einen Wasserbehälter abgeschieden. Das Wasser wird aus dem Wasserbehälter zurück in den Betriebsstofftank gefördert, wenn der Wasserbehälter im Wesentlichen gefüllt ist. Das Wasser wird aus dem Wasserbehälter in eine Abgasanlage gefördert, wenn ein Abgasvolumenstrom wenigstes ausreichend ist und wenn der Wasserbehälter im Wesentlichen gefüllt ist, wobei das in die Abgasanlage hineingeförderte Wasser im heißen Abgasstrom verdampft und in eine lokale Umgebung entlassen wird.

Hierbei liegt das Wasser bevorzugt in Tröpfchenform im Betriebsstoff vor.

Unter einem Wasserbehälter soll ein teilweise abgeschlossener Raum (Gefäß) verstanden sein, der sich zum Sammeln einer bestimmten Menge von Wasser eignet. Hierbei braucht der Wasserbehälter nicht eigens als ein Wasserbehälter konzipiert zu sein; ein Raum zum Ansammeln von Wasser genügt.
So kann der Wasserbehälter z.B. auch ein Abschnitt eines Betriebsstofffilters, wie beispielweise eines Betriebsstoffvorfilters sein. Es ist natürlich möglich, den Wasserbehälter eigens als einen solchen zu konzipieren. Im Fall des Betriebsstofffilters kann dies ein hohler Bereich eines Gehäuses des Betriebsstofffilters sein, in welchem z.B. kein Filtermaterial vorliegt.

In einer Ausführungsform wird Wasser mittels einer Wasserfördereinrichtung unten in den Betriebsstofftank hineingefördert.

Ferner wird Wasser mittels einer Wasserfördereinrichtung in die Abgasanlage hineingefördert. D.h. flüssiges Wasser wird einem heißen Abgasstrom bevorzugt in einem Abgasschalldämpfer der Abgasanlage beigegeben, dort verdampft und in eine Umgebung entlassen. Hierbei kann eine Entwässerungseinrichtung bzw. eine Mündung der Entwässerungseinrichtung an/in der Abgasanlage ggf. zusätzlich als eine Unterdruckpumpe ausgebildet sein.

Die Wasserfördereinrichtung ist insbesondere als eine Entwässerungspumpe ausgebildet.

In einer Ausführungsform wird Wasser aus dem Betriebsstofftank, aus dem Wasserbehälter, aus einer Entwässerungsleitung und/oder aus einer Wasserfördereinrichtung heraus abgelassen.

Ferner wird in einer Ausführungsform Betriebsstoff im Wesentlichen auf Höhe eines Niveaus des Betriebsstoffs im Betriebsstofftank aus dem Betriebsstofftank herausgefördert. Dies erfolgt bevorzugt mittels eines Betriebsstoff-Ansaugschwimmers und bevorzugt mittels eines flexiblen Betriebsstoffschlauchs am Betriebsstoff-Ansaugschwimmer.

In einer Ausführungsform der Erfindung wird zeitlich vor einem Betanken oder einer Inbetriebnahme eines Motors in einer Betriebsstoff-Versorgungseinrichtung des Motors vorliegendes Wasser abgelassen.

Dies erfolgt z.B. an einer Wasserentnahmestelle des Betriebsstofftanks, des Wasserbehälters, der Entwässerungsleitung und/oder der Wasserfördereinrichtung.

Gemäß der Erfindung wird der Betriebsstoff zum Verbrennungsmotor hingefördert.

Wasser wird mittels der Wasserfördereinrichtung, insbesondere einer Entwässerungspumpe, aus dem Wasserbehälter herausgefördert.

Ferner kann in einer Ausführungsform der Erfindung die Wasserfördereinrichtung sensorsignalgesteuert, zeitweise, einstellbar zeitgesteuert oder permanent arbeiten.

Die erfindungsgemäße Entwässerungseinrichtung für einen Kraftstoff eines Schienenfahrzeugs ist zur Durchführung des oben geschilderten Entwässerungsverfahrens ausgebildet. Sie weist einen Wasserbehälter auf, in welchem im Betriebsstoff vorliegendes Wasser abscheidbar ist. Die Entwässerungseinrichtung weist eine Entwässerungsleitung auf, welche vom Wasserbehälter zu einem Betriebsstofftank und zu einer Abgasanlage führt.

Die Entwässerungsleitung weist eine Zulaufleitung zu einer Wasserfördereinrichtung und sowohl eine Rücklaufleitung von der Wasserfördereinrichtung zum Betriebsstofftank und eine Vorlaufleitung von der Wasserfördereinrichtung zur Abgasanlage auf, wobei die Rücklaufleitung mit der Vorlaufleitung fluidmechanisch gekoppelt ist.

Es ist natürlich möglich, die Wasserfördereinrichtung im Wesentlichen direkt am Wasserbehälter, am Betriebsstofftank oder an der Abgasanlage vorzusehen. In einem solchen Fall fällt, abgesehen von einem betreffenden Anschluss oder betreffenden Anschlüssen, die Zulaufleitung, die Rücklaufleitung und/oder die Vorlaufleitung, oder gar die Entwässerungsleitung selbst weg. Die entsprechende Leitung ist dann durch die Wasserfördereinrichtung bzw. deren Anschluss substituiert.

Der Wasserbehälter, der Betriebsstofftank, die Entwässerungsleitung und/oder die Wasserfördereinrichtung kann bzw. können eine Wasserentnahmestelle aufweisen. Weist die Entwässerungsleitung wenigstens eine Wasserentnahmestelle auf, so kann diese an der Zulaufleitung, der Rücklaufleitung und/oder der Vorlaufleitung vorgesehen sein. Die Wasserentnahmestelle kann z.B. als ein manuell oder elektromechanisch betätigbares Entwässerungsventil, wie z.B. ein Ablasshahn, ausgebildet sein.

Gemäß der Erfindung stammt der Betriebsstoff bevorzugt aus dem Betriebsstofftank. Ferner kann der Wasserbehälter Teil eines Betriebsstofffilters des Fahrzeugs, bevorzugt Teil eines Betriebsstoffvorfilters des Fahrzeugs, sein. Darüber hinaus kann die Entwässerungsleitung bzw. die Zulaufleitung, die Rücklaufleitung und/oder die Vorlaufleitung ein Stellmittel aufweisen. Des Weiteren kann mittels des Stellmittels (Rückschlagventil) ein Rücklaufen und/oder ein Vorlaufen des Wassers verhinderbar sein.

Die Entwässerungseinrichtung kann in einer Ausführungsform derart ausgebildet sein, dass Betriebsstoff mittels eines auf dem Betriebsstoff schwimmbaren Betriebsstoff-Ansaugschwimmers im Betriebsstofftank und bevorzugt mittels eines insbesondere flexiblen Betriebsstoffschlauchs im Betriebsstofftank aus dem Betriebsstofftank herausförderbar ist. Hierbei ist eine Betriebsstoff-Versorgungseinrichtung, welche die Entwässerungseinrichtung aufweist, derart ausgebildet, dass der Betriebsstoff in der Folge in einen Betriebsstofffilter, bevorzugt einen Betriebsstoffvorfilter, und in einen Verbrennungsmotor förderbar ist. Kommt ein Betriebsstoffvorfilter zur Anwendung, so ist zwischen dem Betriebsstoffvorfilter und dem Verbrennungsmotor bevorzugt ferner ein Betriebsstoffhauptfilter vorgesehen.

Die erfindungsgemäße Betriebsstoff-Versorgungseinrichtung weist einen Betriebsstofftank auf, wobei Betriebsstoff im Betriebsstofftank mittels eines oben auf dem Betriebsstoff aufschwimmbaren Betriebsstoff-Ansaugschwimmers im Betriebsstofftank aus dem Betriebsstofftank herausförderbar ist. Der Betriebsstoff-Ansaugschwimmer kann einen bevorzugt flexiblen Betriebsstoffschlauch aufweisen, mittels welchem Betriebsstoff aus dem Betriebsstofftank herausförderbar ist. Hierbei kann der Betriebsstoffschlauch z.B. oben, mittig oder unten im/am Betriebsstofftank fluidmechanisch weiter kontaktiert sein, wofür der Betriebsstofftank einen entsprechenden Anschluss aufweisen kann. Es ist auch möglich, dass der Betriebsstoffschlauch durch eine Wandung des Betriebsstofftanks hindurchführt und außerhalb des Betriebsstofftanks fluidmechanisch weiter kontaktiert ist.

Die Betriebsstoff-Versorgungseinrichtung kann stromabwärts des Betriebsstoff-Ansaugschwimmers bzw. des Betriebsstoffschlauchs eine Betriebsstofffördereinrichtung aufweisen. Die Betriebsstofffördereinrichtung, insbesondere eine Betriebsstoffpumpe, ist bevorzugt außerhalb des Betriebsstofftanks vorgesehen. Die Betriebsstoff-Versorgungseinrichtung kann ferner einen Betriebsstofffilter, insbesondere einen Betriebsstoffvorfilter und/oder einen Betriebsstoffhauptfilter, sowie entsprechende Betriebsstoffleitungen aufweisen. Ferner kann der Betriebsstofftank eine Wasserentnahmestelle aufweisen.

Die Erfindung ist im Folgenden anhand von Ausführungsbeispielen unter Bezugnahme auf die beigefügte Zeichnung näher erläutert.

In den Figuren zeigen:
- FIG 1: eine Ausführungsform einer erfindungsgemäßen Betriebsstoff-Versorgungseinrichtung sowie eine erste Ausführungsform einer erfindungsgemäßen Entwässerungseinrichtung für ein Fahrzeug;
- FIG 2: eine zweite Ausführungsform der erfindungsgemäßen Entwässerungseinrichtung für das Fahrzeug, insbesondere ein Schienenfahrzeug; und
- FIG 3: eine dritte Ausführungsform der erfindungsgemäßen Entwässerungseinrichtung für das Fahrzeug, insbesondere das Schienenfahrzeug.

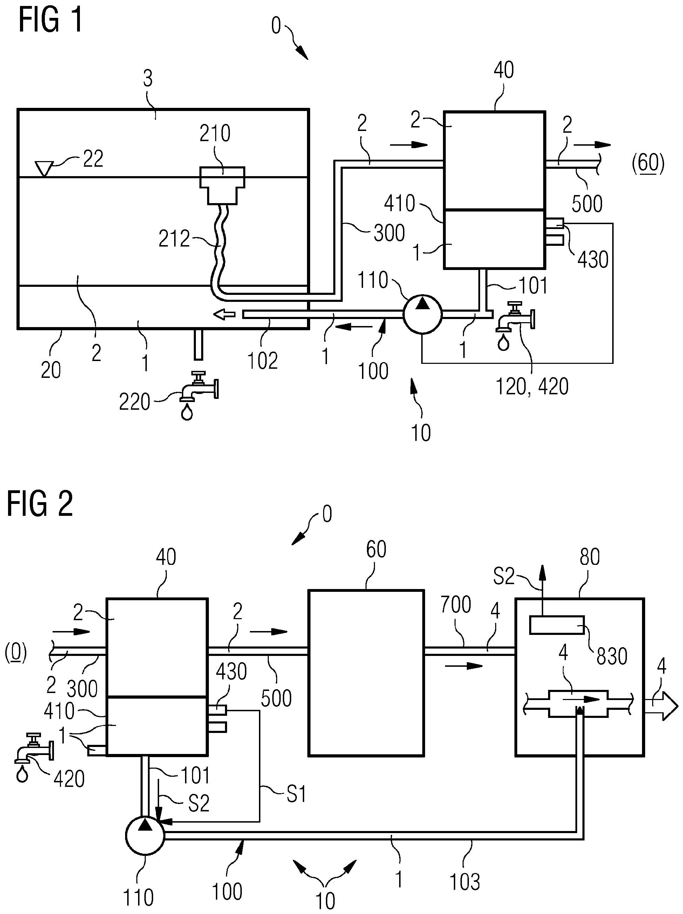

Die Erfindung ist im Folgenden anhand von Ausführungsbeispielen einer Ausführungsform einer Variante einer Betriebsstoff-Versorgungseinrichtung 0 (vgl. die FIG 1) und von drei Ausführungsformen einer Variante (vgl. die FIG 1 bis 3) einer Entwässerungseinrichtung 10 für ein Schienenfahrzeug näher erläutert.

So ist eine erfindungsgemäße Entwässerungseinrichtung auf alle Verbrennungsmotoren, insbesondere Dieselmotoren, anwendbar. Dies betrifft z.B. Motoren von Stromaggregaten, Lastkraftwagen, Militärfahrzeugen, Schienenfahrzeugen, Schiffen etc. Ferner ist die Erfindung auf alle Bereiche anwendbar, welche mit kontaminierten Dieselkraftstoffen rechnen müssen, wie z.B. im Bergbau, auf Baustellen, etc. Betreffende Hersteller sind z.B. Motorenhersteller; Motorenzulieferer, z.B. Filterhersteller; Nutzfahrzeughersteller; Hersteller von Stromaggregaten; Hersteller von Schiffsmotoren etc.

In der Zeichnung sind nur diejenigen Abschnitte dargestellt, welche für ein Verständnis der Erfindung notwendig sind. Obwohl die Erfindung im Detail durch bevorzugte Ausführungsbeispiele näher beschrieben und illustriert ist, so ist die Erfindung nicht durch die offenbarten Ausführungsbeispiele eingeschränkt. Andere Variationen können hieraus abgeleitet werden ohne den Schutzumfang der Erfindung zu verlassen.

Die FIG 1 zeigt die erfindungsgemäße Betriebsstoff-Versorgungseinrichtung 0, bevorzugt ausgebildet als eine Kraftstoff-Versorgungseinrichtung 0, wobei die Versorgungseinrichtung 0 wenigstens einen Betriebsstofftank 20, insbesondere einen Kraftstofftank 20, bevorzugt mit einem inneren Schutzanstrich oder einer inneren Phosphatierung aufweist. Ein Pegel 22 bzw. Niveau 22 eines Betriebsstoffs 2, insbesondere eines Kraftstoffs 2, ist mit einem Dreieck 22 in der FIG 1 markiert. Darüber befindet sich meist Luft 3. Der Kraftstoff 2 ist dem Kraftstofftank 20 mittels eines auf dem Kraftstoff 2 aufschwimmbaren Kraftstoff-Ansaugschwimmers 210 (Betriebsstoff-Ansaugschwimmer 210) entnehmbar und insbesondere durch einen bevorzugt wenigstens teilflexiblen Kraftstoffschlauch 212 (Betriebsstoffschlauch 212) hindurch vom Ansaugschwimmer 210 wegförderbar. Hierbei ist der Kraftstoffschlauch 212 bevorzugt an den Ansaugschwimmer 210 fluidmechanisch angeschlossen.

Eine fluidmechanische Weiterkontaktierung des Kraftstoffschlauchs 212 kann an einem bevorzugt innen im Kraftstofftank 20 liegenden Anschluss erfolgen, oder der Kraftstoffschlauch 212 ist nach außen geführt und am Kraftstofftank 20 oder einer anderen Vorrichtung, wie z.B. einem Kraftstofffilter 40 (Betriebsstofffilter 40), fluidmechanisch weiterkontaktiert. Hierbei kann der Kraftstoffschlauch 212 zu einer Kraftstoffleitung 300 (Betriebsstoffleitung 300) führen, die den Kraftstoff-Ansaugschwimmer 210 mit dem Kraftstofffilter 40 fluidmechanisch verbindet. Ferner kann die Versorgungseinrichtung 0 stromabwärts des Kraftstoff-Ansaugschwimmers 210, insbesondere stromabwärts des Kraftstoffschlauchs 212, eine Kraftstofffördereinrichtung (Betriebsstofffördereinrichtung) aufweisen.

Des Weiteren kann die Versorgungseinrichtung 0, abgesehen von Anschlüssen etc., den Kraftstofffilter 40, bevorzugt einen Kraftstoffvorfilter 40 (Betriebsstoffvorfilter 40) und/oder einen Kraftstoffhauptfilter (Betriebsstoffhauptfilter) sowie eine Kraftstoffleitung 500 (Betriebsstoffleitung 500) vom Kraftstofffilter 40 zu einem Verbrennungsmotor 60, insbesondere einem Dieselmotor 60, des Schienenfahrzeugs umfassen. - Ein Vorteil dieser Anordnung liegt darin, dass der Kraftstoff 2 im Kraftstofftank 20 über den Ansaugschwimmer 210 an einer Oberfläche bzw. in einem Oberflächenbereich des Kraftstoffs 2 in den Kraftstofffilter 40 ansaugbar ist, wodurch, im Vergleich mit einem unteren Ansaugbereich (Stand der Technik) lediglich eine geringe Wassermenge im Kraftstofffilter 40 abgeschieden wird (siehe unten).

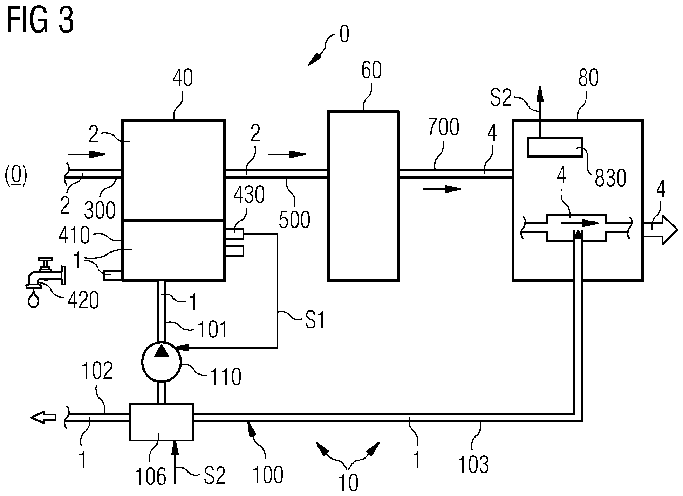

In einer bevorzugten Ausführungsform der erfindungsgemäßen Einrichtung bzw. des erfindungsgemäßen Systems (Antrieb, insbesondere Dieselantrieb, Schienenfahrzeug, Kraftfahrzeug etc.) wird in einem Wasserbehälter 410 abgeschiedenes Wasser 1 wieder in einen Kraftstofftank 20 zurückgeführt (FIG 1). Ferner kann in einer bevorzugten Ausführungsform im Wasserbehälter 410 abgeschiedenes Wasser 1 weiter in eine Abgasanlage 80 gefördert werden, wo es in einem Strom eines heißen Abgases 4, bevorzugt in einem Abgasschalldämpfer 80, verdampft und ein entstandener Wasserdampf in eine lokale Umgebung entlassen wird (FIG 2). Des Weiteren kann in einer bevorzugten Ausführungsform im Wasserbehälter 410 abgeschiedenes Wasser 1 wieder in den Kraftstofftank 20 zurückgeführt werden und kann abgeschiedenes Wasser 1 (aus dem Kraftstofftank 20 oder dem Wasserbehälter 410) in die Abgasanlage 80 gefördert werden (FIG 3) .

Die FIG 1 bis 3 zeigen jeweils eine Ausführungsform der Entwässerungseinrichtung 10 eines Kraftstoffs 2 (Betriebsstoff 2) des Schienenfahrzeugs bzw. von dessen Kraftstoff-Versorgungseinrichtung 0. Die Entwässerungseinrichtung 10 umfasst dabei im Wesentlichen eine Entwässerungsleitung 100, welche von einem Wasserbehälter 410 zu einem Kraftstofftank 20 (Betriebsstofftank 20) und/oder vom Wasserbehälter 410 zu einer Abgasanlage 80, insbesondere einem Abgasschalldämpfer 80, führt. Die Entwässerungsleitung 100 kann eine Wasserentnahmestelle 120, ggf. mit einem Entwässerungsstellmittel (z.B. Entwässerungsventil, Ablasshahn, manuell oder elektromechanisch betätigbar) aufweisen.

Für eine Förderung eines im Wasserbehälter 410 abgeschiedenen Wassers 1 weist die Entwässerungseinrichtung 10 bzw. die Entwässerungsleitung 100 eine Wasserfördereinrichtung 110, insbesondere eine Entwässerungspumpe 110, auf. Der Wasserbehälter 410 kann ein Teil oder ein Abschnitt eines Kraftstofffilters 40 (Betriebsstofffilter 40), bevorzugt eines Kraftstoffvorfilters 40 (Betriebsstoffvorfilter 40) sein. Die Wasserfördereinrichtung 110 kann eine Wasserentnahmestelle (nicht dargestellt), ggf. mit einem Entwässerungsstellmittel (z.B. Entwässerungsventil, Ablasshahn, manuell oder elektromechanisch betätigbar) aufweisen. Ferner kann der Kraftstofftank 20 und/oder der Wasserbehälter 410 eine Wasserentnahmestelle 220, 420, ggf. jeweils mit einem Entwässerungsstellmittel (z.B. Entwässerungsventil, Ablasshahn, manuell oder elektromechanisch betätigbar) aufweisen.

Je nach einer Stellung eines oder einer Mehrzahl von Stellmitteln, bevorzugt eines oder einer Mehrzahl von elektrisch stellbaren und/oder manuell bedienbaren Ventilen, in der Entwässerungseinrichtung 10 bzw. der Entwässerungsleitung 100, kann im Wasserbehälter 410 abgeschiedenes Wasser 1 zurück zum / in den Kraftstofftank 20 und/oder vorwärts zur / in die Abgasanlage 80 gefördert werden. Hierbei kann ferner je nach einer Stellung des betreffenden Stellmittels der Kraftstofftank 20 fluidmechanisch in Kontakt mit der Abgasanlage 80 gebracht werden. - Die folgenden Ausführungen sind natürlich auch auf einen Betriebsstoff 2 statt dem Kraftstoff 2 anwendbar.

Die FIG 1 zeigt neben der Kraftstoff-Versorgungseinrichtung 0 die erste Ausführungsform der Entwässerungseinrichtung 10. Hierbei umfasst die Entwässerungsleitung 100 eine Zulaufleitung 101 und lediglich eine Rücklaufleitung 102. Die Zulaufleitung 101 führt vom Wasserbehälter 410 zur Wasserfördereinrichtung 110 / in die Rücklaufleitung 102. Die Rücklaufleitung 102 führt von der Zulaufleitung 101 / von der Wasserfördereinrichtung 110 zurück zum / in den Kraftstofftank 20. Hierbei kann die Zulaufleitung (101) als ein Abschnitt der Rücklaufleitung 102 ausgebildet sein bzw. vice versa. Der Wasserbehälter 410 und/oder die Zulaufleitung 101 (bevorzugt) weist eine Wasserentnahmestelle 120, 420 auf.

Bevorzugt weist der Wasserbehälter 410 einen Wasserbehältersensor 430 bzw. Wasserbehälterdetektor 430 auf, welcher in Abhängigkeit eines Pegels oder Niveaus von Wasser 1 im Wasserbehälter 410 ein Sensorsignal S1 ausgibt. In einfachsten Fall ist der Wasserbehältersensor 430 ein Schwellwertsensor. Über ein Sensorsignal S1, z.B.: ,Wasserbehälter voll' (ausreichend oder im Wesentlichen mit Wasser 1 gefüllter Wasserbehälter 410), fördert die bevorzugt wartungsfreie Entwässerungspumpe 110 Wasser 1 unten aus dem Wasserbehälter 410 nach unten direkt in den Kraftstofftank 20 hinein. Durch eine Rückführung des Wassers 1 unten in den Kraftstofftank 20 wird ein abgesetzter Schlamm im Kraftstoff 2 im Kraftstofftank 20 aufgewirbelt und kann später im Kraftstoffvorfilter 40 abgetrennt werden.

In der Rücklaufleitung 102 kann ein Ventil (nicht dargestellt), z.B. ein Rückschlagventil, ein ungewolltes Rücklaufen von Wasser 1 aus dem Kraftstofftank 20 in den Wasserbehälter 410 vermeiden. Beim Ablassen kann dieses Ventil durch das Entwässerungsstellmittel der Wasserentnahmestelle 120/220/420 umgangen werden. - Die Entwässerungspumpe 110 kann neben einer Sensorsignalansteuerung auch einstellbar zeitgesteuert oder permanent arbeiten. Ein in allen drei Fällen ggf. mitgeförderter Kraftstoff 2 führt zu keinem Ausfall. Das Wasser 1 kann am Kraftstofftank 20 (Wasserentnahmestelle 220) und/oder am Kraftstoffvorfilter 40 (Wasserentnahmestelle 120, 420) abgelassen werden.

Ein Betreiber oder Triebfahrzeugführer des Schienenfahrzeugs kann eine Fahrt sicher und ohne eine Unterbrechung bis zu einem kommenden Tankstopp fortführen. Motorschäden oder gar kapitale Motorschäden werden sicher vermieden. Vor einem Betanken des Schienenfahrzeugs sollte Wasser 1 am Kraftstoffvorfilter 40 abgelassen werden. Die Endekriterien dieses Vorgangs bleiben für den Betreiber oder Triebfahrzeugführer gleich. Sollte kein Wasser 1 abgelassen werden, mindert sich eine Füllmenge an Kraftstoff 2 und damit lediglich eine Reichweite des Schienenfahrzeugs.

Die FIG 2 zeigt die zweite Ausführungsform der Entwässerungseinrichtung 10. Hierbei umfasst die Entwässerungsleitung 100 eine Zulaufleitung 101 und lediglich eine Vorlaufleitung 103. Die Zulaufleitung 101 führt vom Wasserbehälter 410 zur Wasserfördereinrichtung 110 / in die Vorlaufleitung 103. Die Vorlaufleitung 103 führt von der Zulaufleitung 101 / von der Wasserfördereinrichtung 110 vorwärts zur / in die Abgasanlage 80, insbesondere zur / in den Abgasschalldämpfer 80. Hierbei kann die Zulaufleitung (101) als ein Abschnitt der Vorlaufleitung 103 ausgebildet sein bzw. vice versa. Der Wasserbehälter 410 (bevorzugt) und/oder die Zulaufleitung 101 weist eine Wasserentnahmestelle 120, 420 auf.

Wie auch bei der FIG 1 kann hier analog der Wasserbehältersensor 430 bzw. Wasserbehälterdetektor 430 vorgesehen sein. Ferner weist die Abgasanlage 80 bzw. der Abgasschalldämpfer 80 einen Volumenstromsensor 830 bzw. Volumenstromdetektor 830 auf. Hierbei erkennt der Volumenstromsensor 830 wenigstens einen Volumenstromschwellwert in wenigstens einem Abschnitt der Abgasanlage 80 bzw. des Abgasschalldämpfers 80 und generiert ein Sensorsignal S2.

Über ein Sensorsignal S1, z.B.: ,Wasserbehälter voll' (ausreichend oder im Wesentlichen mit Wasser 1 gefüllter Wasserbehälter 410), und das Sensorsignal S2, z.B.: ,Volumenstrom erreicht', fördert die Entwässerungspumpe 110 Wasser 1 unten aus dem Wasserbehälter 410, bevorzugt unterstützt durch eine Unterdruckpumpe (Mündung der Vorlaufleitung 103 an/in der Abgasanlage 80 bzw. dem Abgasschalldämpfer 80), in die Abgasanlage 80 bzw. den Abgasschalldämpfer 80. Eventuell vorhandene Dieselpartikel werden im Abgasschalldämpfer 80 verbrannt. Der Betreiber oder Triebfahrzeugführer muss nicht mehr während eines Betriebs des Schienenfahrzeugs manuell Wasser 1 aus dem Kraftstoffvorfilter 40 ablassen. Das Schienenfahrzeug entwässert sich während eines Betriebs selbst. Motorschäden oder gar kapitale Motorschäden werden sicher vermieden.

Die FIG 3 zeigt die dritte Ausführungsform der Entwässerungseinrichtung 10, welche eine Kombination der ersten und der zweiten Ausführungsform ist. D.h. die Entwässerungsleitung 100 weist neben der Zulaufleitung 101 sowohl die Rücklaufleitung 102 als auch die Vorlaufleitung 103 auf. Hierbei ist bevorzugt ein Stellmittel 106, insbesondere ein Ventil 106, an/in der Entwässerungsleitung 100 bevorzugt zwischen der Zulaufleitung 101, der Rücklaufleitung 102 und der Vorlaufleitung 103 vorsehen. Mittels des Ventils 106 ist einstellbar, welchen Weg (Wasserbehälter 410 zum Kraftstofftank 20, Wasserbehälter 410 zur Abgasanlage 80 oder Kraftstofftank 20 zur Abgasanlage 80) das abgeschiedene Wasser 1 nehmen soll. Ferner kann in Ausführungsbeispielen mittels des Ventils 106 ein Volumenstrom durch die Rücklaufleitung 102 bzw. die Vorlaufleitung 103 eingestellt werden. Die Wasserfördereinrichtung 110 ist dabei bevorzugt fluidmechanisch in/die Zulaufleitung 101 ein/angekoppelt.

Über ein Sensorsignal S1, z.B.: ,Wasserbehälter voll' (ausreichend oder im Wesentlichen mit Wasser 1 gefüllter Wasserbehälter 410), fördert die bevorzugt wartungsfreie Entwässerungspumpe 110 Wasser 1 unten aus dem Wasserbehälter 410 nach unten direkt in den Kraftstofftank 20 hinein. In der Rücklaufleitung 102 verhindert ein Ventil das ungewollte Rücklaufen des Wassers in den Kraftstoffvorfilter 40. Beim Ablassen kann dieses Ventil durch das Entwässerungsstellmittel der Wasserentnahmestelle (120)/220/420 umgangen werden. Die Entwässerungspumpe 110 kann sensorgesteuert, einstellbar zeitgesteuert oder auch permanent arbeiten. Mitgeförderter Kraftstoff 2 führt zu keinem Ausfall.

Zusätzlich kann über das Ventil 106 (bei stromlosen Ventil 106 ist eine Leitung 101/102 zum Kraftstofftank 20 bevorzugt offen oder alle Leitungen 101, 102, 103 gegeneinander gedichtet) ein Förderweg bei Anliegen eines Sensorsignals S2, z.B.: ,Volumenstrom erreicht', auf die Abgasanlage 80 bzw. den Abgasschalldämpfer 80 umgeschaltet werden. Wasser 1 kann bevorzugt sowohl am Kraftstofftank 20 als auch am Kraftstoffvorfilter 40 abgelassen werden. - Ein Betreiber oder Triebfahrzeugführer des Schienenfahrzeugs kann eine Fahrt sicher und ohne eine Unterbrechung bis zu einem kommenden Tankstopp fortführen und das Fahrzeug mit laufendem Motor bei Leerlaufdrehzahl abstellen. Das Schienenfahrzeug entfernt während der Fahrt das Wasser aus dem Kraftstoff 2. Motorschäden oder gar kapitale Motorschäden werden sicher vermieden.

## Patentansprüche

1. Verfahren zum Entwässern eines Kraftstoffs (2)während eines Betriebs eines Schienenfahrzeugs,
- bei dem Kraftstoff als Betriebsstoff (2) aus einem Betriebsstofftank (20) herausgefördert wird,
- bei dem im Betriebsstoff (2) vorliegendes Wasser (1) in einen Wasserbehälter (410) abgeschieden wird,
- bei dem das Wasser (1) aus dem Wasserbehälter (410) zurück in den Betriebsstofftank (20) gefördert wird, wenn der Wasserbehälter (410) im Wesentlichen gefüllt ist,
**dadurch gekennzeichnet, dass**
das Wasser aus dem Wasserbehälter (410) in eine Abgasanlage (80) gefördert wird, wenn ein Abgasvolumenstrom wenigstes ausreichend ist und wenn der Wasserbehälter (410) im Wesentlichen gefüllt ist, wobei das in die Abgasanlage hineingeförderte Wasser im heißen Abgasstrom verdampft und in eine lokale Umgebung entlassen wird.

2. Entwässerverfahren nach Anspruch 1,
- bei dem Wasser (1) mittels einer Wasserfördereinrichtung (110) im Wesentlichen unten in den Betriebsstofftank (20) hineingefördert wird; und
- bei dem Wasser (1) mittels der Wasserfördereinrichtung (110) in die Abgasanlage (80) hineingefördert wird.

3. Entwässerverfahren gemäß einem der vorhergehenden Ansprüche,
- bei dem das Wasser (1) aus dem Betriebsstofftank (20) und/oder aus dem Wasserbehälter (410) abgelassen wird; und/oder
- bei dem Betriebsstoff (2) im Wesentlichen auf Höhe eines Niveaus des Betriebsstoffs (2) im Betriebsstofftank (20) aus dem Betriebsstofftank (20) herausgefördert wird.

4. Entwässerverfahren gemäß einem der vorhergehenden Ansprüche, bei dem zeitlich vor einem Betanken oder einer Inbetriebnahme eines Motors in einer Betriebsstoff-Versorgungseinrichtung (0) des Motors vorliegendes Wasser (1) abgelassen wird.

5. Entwässerverfahren gemäß einem der vorhergehenden Ansprüche,
- bei dem der Betriebsstoff (2) zu einem Verbrennungsmotor (60) hingefördert wird;
- bei dem Wasser (1) mittels einer Wasserfördereinrichtung (110), die als Entwässerungspumpe ausgebildet ist (110), aus dem Wasserbehälter (410) herausgefördert wird;
- bei dem die Wasserfördereinrichtung (110) sensorsignalgesteuert, einstellbar zeitgesteuert oder permanent arbeitet.

6. Entwässerungseinrichtung (10) für einen Kraftstoff (2) eines Schienenfahrzeugs, die zur Durchführung des Entwässerverfahrens nach einem der Ansprüche 1 bis 5 ausgebildet ist, mit einem Wasserbehälter (410), in welchem im Betriebsstoff (2) vorliegendes Wasser (1) abscheidbar ist, bei der die Entwässerungseinrichtung (10) eine Entwässerungsleitung (100; 101, 102, 103) aufweist, welche vom Wasserbehälter (410) zu einem Betriebsstofftank (20) und zu einer Abgasanlage (80) führt.

7. Entwässerungseinrichtung (10) gemäß vorhergehendem Anspruch, bei der die Entwässerungsleitung (100; 101, 102, 103) eine Zulaufleitung (101) zu einer Wasserfördereinrichtung (110) und sowohl eine Rücklaufleitung (102) von der Wasserfördereinrichtung (110) zum Betriebsstofftank (20) und eine Vorlaufleitung (103) von der Wasserfördereinrichtung (110) zur Abgasanlage (30) aufweist.

8. Entwässerungseinrichtung (10) gemäß einem der vorhergehenden Ansprüche 6 oder 7, bei der der Wasserbehälter (410), der Betriebsstofftank (20), die Entwässerungsleitung (100; 101, 102, 103) und/oder die Wasserfördereinrichtung (110) eine Wasserentnahmestelle (120, 220) aufweist.

9. Entwässerungseinrichtung (10) gemäß einem der vorhergehenden Ansprüche 6 bis 8,
- bei der der Betriebsstoff (2) aus dem Betriebsstofftank (20) stammt;
- bei der der Wasserbehälter (410) Teil eines Betriebsstofffilters (40), ist;
- bei der die Zulaufleitung (101), die Rücklaufleitung (102) und/oder die Vorlaufleitung (103) ein Stellmittel (106) aufweist.

10. Entwässerungseinrichtung (10) gemäß einem der vorhergehenden Ansprüche 6 bis 9, bei der der Betriebsstoff (2) mittels eines auf dem Betriebsstoff (2) schwimmbaren Betriebsstoff-Ansaugschwimmers (210) im Betriebsstofftank (20) und mittels eines Betriebsstoffschlauchs (212) im Betriebsstofftank (20) aus dem Betriebsstofftank (20) herausförderbar ist.

## Claims

1. Method for dewatering a fuel (2) during operation of a rail vehicle,
- in the case of which method fuel is conveyed as operating medium (2) out of an operating medium tank (20),
- in the case of which method water (1) which is present in the operating medium (2) is separated into a water container (410) ,
- in the case of which method the water (1) is conveyed from the water container (410) back into the operating medium tank (20) if the water container (410) is substantially filled,
**characterized in that**
the water is conveyed from the water container (410) into an exhaust gas system (80) if an exhaust gas volumetric flow is at least sufficient and if the water container (410) is substantially filled, the water which is conveyed into the exhaust gas system evaporating in the hot exhaust gas stream and being discharged into a local surrounding area.

2. Dewatering method according to Claim 1,
- in the case of which method water (1) is conveyed by means of a water conveying device (110) substantially at the bottom into the operating medium tank (20); and
- in the case of which method water (1) is conveyed by means of the water conveying device (110) into the exhaust gas system (80) .

3. Dewatering method according to either of the preceding claims,
- in the case of which method the water (1) is discharged from the operating medium tank (20) and/or from the water container (410); and/or
- in the case of which method the operating medium (2) is conveyed out of the operating medium tank (20) substantially at the height of a surface level of the operating medium (2) in the operating medium tank (20).

4. Dewatering method according to one of the preceding claims, in the case of which method water (1) which is present in an operating medium supply device (0) of the engine is discharged temporally before fuelling or start-up of an engine.

5. Dewatering method according to one of the preceding claims,
- in the case of which method the operating medium (2) is conveyed to an internal combustion engine (60);
- in the case of which method water (1) is conveyed out of the water container (410) by means of a water conveying device (110) which is configured as a dewatering pump;
- in the case of which method the water conveying device (110) operates in a signal-controlled, adjustably time-controlled or permanent manner.

6. Dewatering device (10) for a fuel (2) of a rail vehicle, which dewatering device (10) is configured to carry out the dewatering method according to one of Claims 1 to 5, with a water container (410), in which water (1) which is present in the operating medium (2) can be separated, in the case of which the dewatering device (10) has a dewatering line (100; 101, 102, 103) which leads from the water container (410) to an operating medium tank (20) and to an exhaust gas system (80).

7. Dewatering device (10) according to the preceding claim, in the case of which the dewatering line (100; 101, 102, 103) has a feed line (101) to a water conveying device (110), and both a return line (102) from the water conveying device (110) to the operating medium tank (20) and an inflow line (103) from the water conveying device (110) to the exhaust gas system (30).

8. Dewatering device (10) according to either of the preceding Claims 6 and 7, in the case of which the water container (410), the operating medium tank (20), the dewatering line (100; 101, 102, 103) and/or the water conveying device (110) have/has a water removal point (120, 220).

9. Dewatering device (10) according to one of the preceding Claims 6 to 8,
- in the case of which dewatering device (10) the operating medium (2) comes from the operating medium tank (20);
- in the case of which dewatering device (10) the water container (410) is part of an operating medium filter (40);
- in the case of which dewatering device (10) the feed line (101), the return line (102) and/or the inflow line (103) have/has an actuating means (106).

10. Dewatering device (10) according to one of the preceding Claims 6 to 9,
in the case of which dewatering device (10) the operating medium (2) can be conveyed out of the operating medium tank (20) by means of an operating medium intake float (210) which can float on the operating medium (2) in the operating medium tank (20) and by means of an operating medium hose (212) in the operating medium tank (20).

## Revendications

1. Procédé de déshumidification d'un carburant (2) pendant le fonctionnement d'un véhicule sur rails,
- dans lequel du carburant en tant que matière consommable (2) est transporté depuis une cuve de matière consommable (20) ,
- dans lequel l'eau (1) présente dans la matière consommable (2) est séparée dans un réservoir d'eau (410),
- dans lequel l'eau (1) est ramenée du réservoir d'eau (410) dans la cuve de matière consommable (20) lorsque le réservoir d'eau (410) est pratiquement plein,
**caractérisé en ce que**
l'eau est transportée du réservoir d'eau (410) dans un système d'échappement (80) lorsqu'un débit volumique de gaz d'échappement est au moins suffisant et lorsque le réservoir d'eau (410) est pratiquement plein, l'eau amenée dans le système d'échappement se volatilisant dans le flux de gaz d'échappement chaud et étant relâchée dans un environnement local.

2. Procédé de déshumidification selon la revendication 1,
- dans lequel l'eau (1) est transportée à l'intérieur de la cuve de matière consommable (20), essentiellement au bas de celle-ci, au moyen d'un dispositif d'acheminement d'eau (110) ; et
- dans lequel l'eau (1) est transportée à l'intérieur du système d'échappement (80) au moyen du dispositif d'acheminement d'eau (110).

3. Procédé de déshumidification selon l'une des revendications précédentes,
- dans lequel l'eau (1) est évacuée depuis la cuve de matière consommable (20) et/ou depuis le réservoir d'eau (410) ; et/ou
- dans lequel la matière consommable (2) est transportée depuis la cuve de matière consommable (20) essentiellement à la hauteur d'un niveau de matière consommable (2) dans la cuve de matière consommable (20).

4. Procédé de déshumidification selon l'une des revendications précédentes, dans lequel l'eau (1) présente dans un dispositif d'alimentation en matière consommable (0) du moteur est évacuée à un moment précédant dans le temps un ravitaillement ou une mise en marche d'un moteur.

5. Procédé de déshumidification selon l'une des revendications précédentes,
- dans lequel la matière consommable (2) est transportée vers un moteur à combustion (60) ;
- dans lequel l'eau (1) est transportée depuis le réservoir d'eau (410) au moyen d'un dispositif d'acheminement d'eau (110) qui est conçu en tant que pompe de déshumidification (110) ;
- dans lequel le dispositif d'acheminement d'eau (110) fonctionne sur commande par signal de capteur, sur commande temporelle réglable ou de manière permanente.

6. Dispositif de déshumidification (10) pour carburant (2) d'un véhicule sur rails, qui est conçu pour l'exécution du procédé de déshumidification selon l'une des revendications 1 à 5, comprenant un réservoir d'eau (410) dans lequel de l'eau (1) présente dans la matière consommable (2) peut être séparée, dans lequel le dispositif de déshumidification (10) comprend une conduite de déshumidification (100; 101, 102, 103) qui conduit du réservoir d'eau (410) vers une cuve de matière consommable (20) et vers un système d'échappement (80).

7. Dispositif de déshumidification (10) selon la revendication précédente, dans lequel la conduite de déshumidification (100; 101, 102, 103) comprend une conduite d'amenée (101) menant à un dispositif d'acheminement d'eau (110) ainsi qu'une conduite de retour (102) menant du dispositif d'acheminement d'eau (110) vers la cuve de matière consommable (20) et une conduite montante (103) menant du dispositif d'acheminement d'eau (110) vers le système d'échappement (80).

8. Dispositif de déshumidification (10) selon l'une des revendications précédentes 6 ou 7,
dans lequel le réservoir d'eau (410), la cuve de matière consommable (20), la conduite de déshumidification (100; 101, 102, 103) et/ou le dispositif d'acheminement d'eau (110) est/sont pourvu/s d'un point de soutirage d'eau (120, 220).

9. Dispositif de déshumidification (10) selon l'une des revendications précédentes 6 à 8,
- dans lequel la matière consommable (2) provient de la cuve de matière consommable (20) ;
- dans lequel le réservoir d'eau (410) fait partie d'un filtre de matière consommable (40) ;
- dans lequel la conduite d'amenée (101), la conduite de retour (102) et/ou la conduite montante (103) est/sont pourvue/s d'un moyen de réglage (106).

10. Dispositif de déshumidification (10) selon l'une des revendications précédentes 6 à 9,
dans lequel la matière consommable (2) peut être transportée depuis la cuve de matière consommable (20) au moyen d'un flotteur d'aspiration de matière consommable (210), situé dans la cuve de matière consommable (20), qui peut flotter sur la matière consommable (2), et au moyen d'un tuyau flexible de matière consommable (212), situé dans la cuve de matière consommable (20).
